# EUROPEAN PATENT APPLICATION

(11) **EP 3 104 576 A1**
(43) Date of publication of application: **14.12.2016**
(21) Application number: 15202496.4
(22) Date of filing: 23.12.2015
(51) Int. Cl.: H04L 29/08, G06F 9/50

(54) **PLATFORM SELECTION ACCORDING TO REQUESTED SERVICE FOR MOBILE-EDGE COMPUTING**

(30) Priority: 12.06.2015 US 201562174535 P; 07.09.2015 TW 104129504
(71) Applicant: Industrial Technology Research Institute, Chutung Hsinchu 31040 (TW)
(72) Inventor: CHIU, Yen-Chang, 350 Miaoli County (TW); TSAI, Yi-Hsing, 304 Hsinchu County (TW); HUANG, Szu-Hsien, 351 Miaoli County (TW)
(74) Representative: dompatent von Kreisler Selting Werner - Partnerschaft von Patent- und Rechtsanwälten mbB

(57) **Abstract**

A controlling method, a network system and a service platform for mobile-edge computing (MEC) are provided. The controlling method includes the following steps. A request message for requesting an application service is received by one of a plurality of service platforms. One of the service platforms is selected according to the application service of the request message. The application service is performed by the selected service platform.

## Description

### TECHNICAL FIELD

The disclosure relates in general to a controlling method and a network system, and more particularly to a controlling method and a network system for mobile-edge computing (MEC).

### BACKGROUND

Along with the explosive growth in information technology, various electronic devices are equipped with network function for performing various application services. Examples of commonly used application services include community websites, video sharing websites, Internet banking, restaurant reservations tool and map tool.

Apart from smart phones and smart TVs, the launching of wearable devices further brings an explosive growth to the networking electronic devices. When many electronic devices are connected to an application service through network, the waiting time of the application service will increase and the network speed will deteriorate. Therefore, how to resolve the above problems has become a prominent task for the industries.

### SUMMARY

The disclosure is directed to a controlling method and a network system for mobile-edge computing (MEC). The application services share information and communicate with each other through the platform interfaces.

According to one embodiment of the invention, a controlling method for mobile-edge computing (MEC) is provided. The controlling method includes the following steps. A request message for requesting an application service is received by one of a plurality of service platforms. One of the service platforms is selected according to the application service of the request message. The application service is performed by the selected service platform.

According to another embodiment of the invention, a network system for mobile-edge computing is provided. The network system for mobile-edge computing includes a plurality of service platforms. A request message for requesting an application service is received by one of the service platforms. One of the service platforms is selected according to the application service of the request message. The application service is performed by the selected service platform.

The above embodiments of the invention will become better understood with regard to the following detailed description of the preferred but non-limiting embodiment (s). The following description is made with reference to the accompanying drawings.

### BRIEF DESCRIPTION OF THE DRAWINGS

FIG. 1 is a schematic diagram of a service platform for mobile-edge computing.
FIG. 2 is a schematic diagram of a network system for mobile-edge computing.
FIG. 3 is a flowchart of a controlling method for mobile-edge computing.
FIG. 4 is a data transmission diagram according to an embodiment.
FIG. 5 is a data transmission diagram according to another embodiment.
FIG. 6 is a data transmission diagram according to another embodiment.
FIG. 7 is a detailed flowchart of the step S120 of FIG. 3.
FIG. 8 is a data transmission diagram according to another embodiment.
FIG. 9 is a data transmission diagram according to another embodiment.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DESCRIPTION OF THE EMBODIMENTS

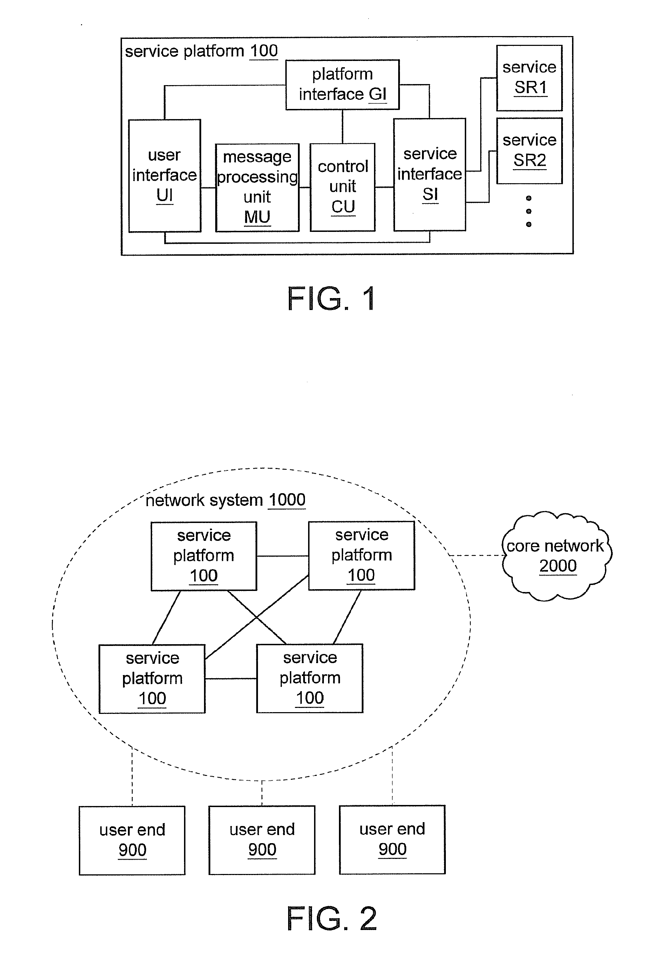

Referring to FIG. 1, a schematic diagram of a service platform 100 for mobile-edge computing is shown. The service platform 100 includes a message processing unit MU, a control unit CU, a user interface UI, a service interface SI and a platform interface GI. The message processing unit MU is for receiving and analyzing various messages. The control unit CU is for performing various control procedures, determination procedures and calculation procedures. The user interface UI is for providing a standard interface of information exchange to communicate with the user end. The service interface SI is for communicating with various application services SR1, SR2, and so on. Examples of the application services SR1, SR2, and so on include community websites, video sharing websites, Internet banking, restaurant reservation tools and map tools. The platform interface GI is for providing a standard interface of service information exchange to communicate with another service platform 100. Each of the message processing unit MU, the control unit CU, the user interface UI, the service interface SI and the platform interface GI can be realized by such as a chip, a circuit board, a circuit or a storage medium storing a plurality of programming codes.

In another embodiment according to the disclosure, each service platform 100 can share information and communicate with another service platform 100 through the platform interface GI. Therefore, various application services of a plurality of service platforms 100 can be efficiently integrated.

Referring to FIG. 2, a network system 1000 for mobile-edge computing is shown. A plurality of service platforms 100 can be connected wirelessly or by cable through the platform interface GI (illustrated in FIG. 1) to form the network system 1000 for mobile-edge computing. The network system 1000 for mobile-edge computing is connected between a core network 2000 and a user end 900 to form a device to device relay base local cloud. Various application services are disposed on the service platforms 100. When the user end 900 wants to perform a particular application service, the user end 900 can directly perform the application service on the network system 1000 for mobile-edge computing instead of the core network 2000. Or, the application service provider can directly provide various messages to the user end 900 through the application service disposed on the network system 1000 for mobile-edge computing instead of the core network 2000.

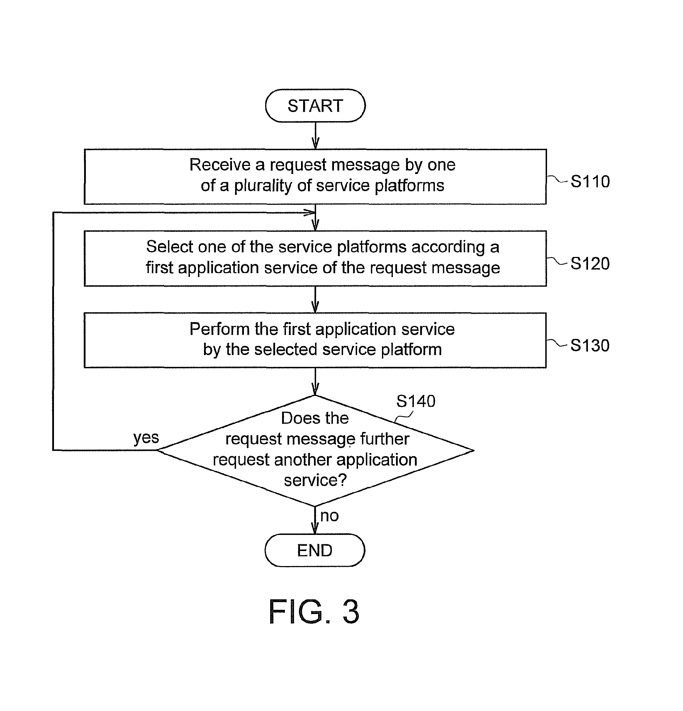

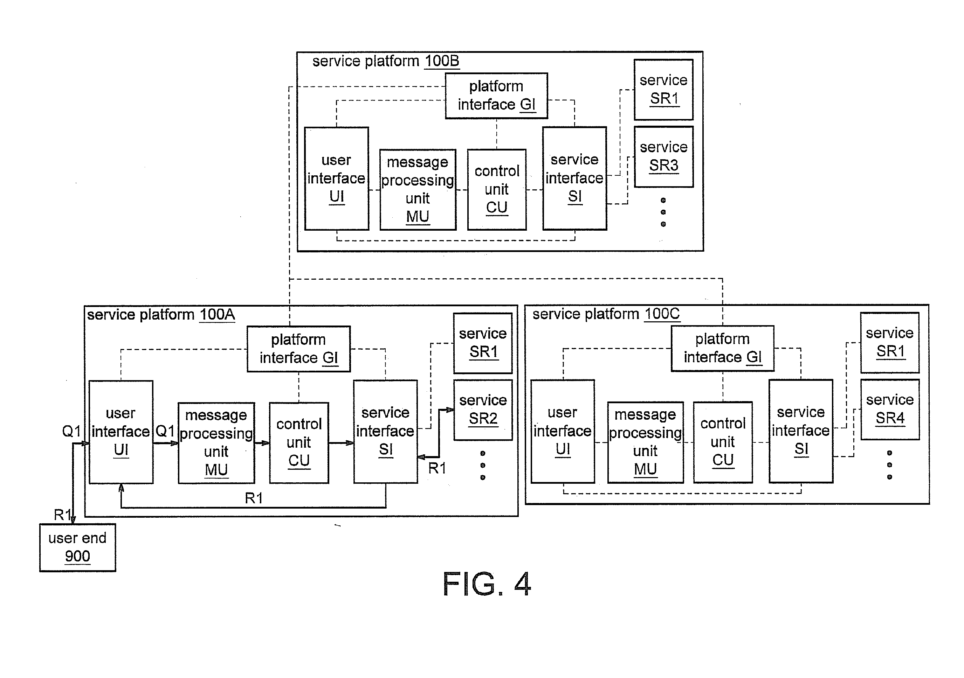

Refer to FIGS. 3 to 4. FIG. 3 is a flowchart of a controlling method for mobile-edge computing. FIG. 4 is a data transmission diagram according to an embodiment. In FIG. 4, dotted lines and solid lines are used to indicate connection relationship between the elements, and the solid lines indicate data transmission in the present example. The service platform 100A has application services SR1, SR2, and so on. The service platform 100B has application services SR1, SR3, and so on. The service platform 100C has application service SR1, SR4, and so on.

Firstly, the method begins at step S110, the user end 900 transmits a request message Q1 to one of the service platforms 100A, 100B, and 100C. For example, the user end 900 transmits the request message Q1 to the service platform 100A. In an embodiment, the request message Q1 is written in a standard hypertext application language (HAL). After the user interface UI of the service platform 100A receives the request message Q1, the message processing unit MU analyzes the content of the request message Q1. In the example of FIG. 4, the request message Q1 is for requesting the application service SR2.

Next, the method proceeds to step S120, the control unit CU of the service platform 100A selects one of the service platforms 100A, 100B, and 100C according to the application service SR2 of the request message Q1. As it is shown in the service mapping of Table 1 below that only the service platform 100A has the application service SR2, the control unit CU of the service platform 100A selects the service platform 100A.

**Table 1**

| Application Service | Service Platform | User Population | User Population Upper Limit |
|---|---|---|---|
| Application Service SR1 | Service Platform 100A | 3 | 12 |
| Application Service SR1 | Service Platform 100B | 5 | 15 |
| Application Service SR1 | Service Platform 100C | 3 | 10 |
| Application Service SR2 | Service Platform 100A | 5 | 10 |
| Application Service SR3 | Service Platform 100B | 4 | 7 |
| Application Service SR4 | Service Platform 100C | 3 | 5 |
| ··· | ··· | ··· | ··· |

Then, the method proceeds to step S130, the control unit CU performs the application service SR2 through the selected service platform 100A. In the present step, the control unit CU accesses the application service SR2 through the service interface SI and a result R1 is transmitted to the user interface UI from the service interface SI, the control unit CU further transmits the result R1 to the user end 900.

Then, the method proceeds to step S140, the control unit CU determines whether the request message Q1 further requests another application service. In the example of FIG. 4, the request message Q1 requests to perform not any other application services but the application service SR2, so the method terminates.

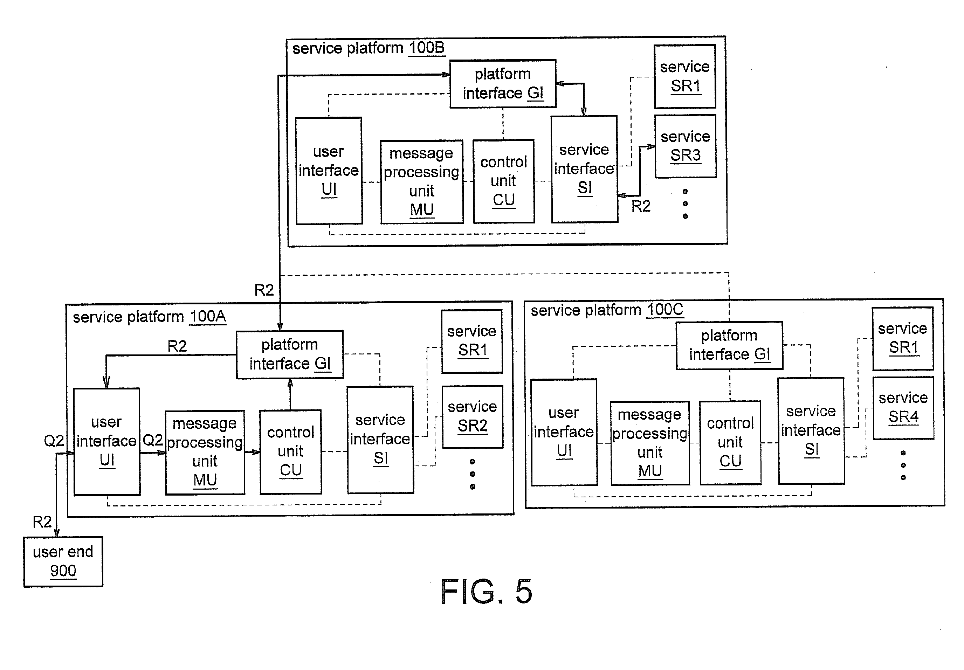

Refer to FIGS. 3 and 5. FIG. 5 is a data transmission diagram according to another embodiment. In FIG. 5, dotted lines and solid lines are used to indicate connection relationship between the elements, and solid lines indicate data transmission in the present example.

Firstly, the method begins at step S110, the user end 900 transmits a request message Q2 to one of the service platforms 100A, 100B, and 100C. For example, the user end 900 transmits the request message Q2 to the service platform 100A. After the user interface UI of the service platform 100A receives the request message Q2, the message processing unit MU analyzes the content of the request message Q2. In the example of FIG. 5, the request message Q2 is for requesting the application service SR3.

Next, the method proceeds to step S120, the control unit CU of the service platform 100A selects one of the service platforms 100A, 100B, and 100C according to the application service SR3 of the request message Q2. As it is shown in the service mapping of Table 1 above that only the service platform 100B has the application service SR3, the control unit CU of the service platform 100A selects the service platform 100B.

Then, the method proceeds to step S130, the control unit CU performs the application service SR3 through the selected service platform 100B. In the present step, the control unit CU of the service platform 100A accesses the application service SR3 through the platform interface GI of the service platform 100A, the platform interface GI of the service platform 100B, and the service interface SI of the service platform 100B. The result R2 is further transmitted to the user end 900 through the service interface SI of the service platform 100B, the platform interface GI of the service platform 100B, the platform interface GI of the service platform 100A, and the user interface UI of the service platform 100A.

Then, the method proceeds to step S140, the control unit CU determines whether the request message Q2 further requests another application service. In the example of FIG. 5, the request message Q2 requests to perform not any other application services but the application service SR3, so the method terminates.

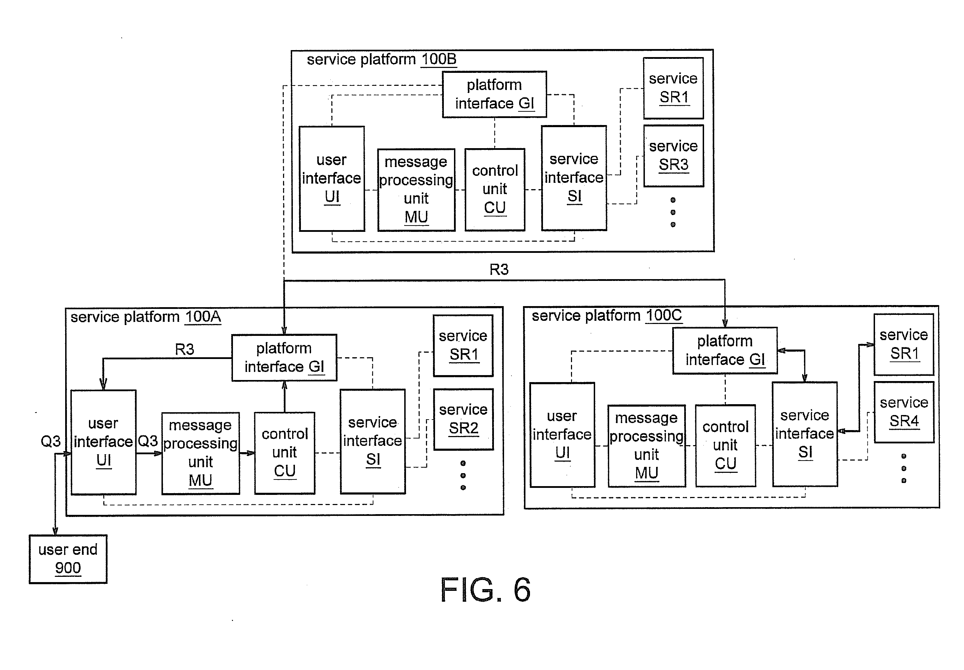

Refer to FIGS. 3 and 6. FIG. 6 is a data transmission diagram according to another embodiment. In FIG. 6, dotted lines and solid lines are used to indicate connection relationship between the elements, and solid lines indicate data transmission in the present example.

Firstly, the method begins at step S110, the user end 900 transmits a request message Q3 to one of the service platforms 100A, 100B, and 100C. For example, the user end 900 transmits the request message Q3 to the service platform 100A. After the user interface UI of the service platform 100A receives the request message Q3, the message processing unit MU analyzes the content of the request message Q3. In the example of FIG. 6, the request message Q3 is for requesting the application service SR1.

Next, the method proceeds to step S120, the control unit CU of the service platform 100A selects one of the service platforms 100A, 100B, and 100C according to the application service SR1 of the request message Q3. As it is shown in the service mapping of Table 1 above that the three service platforms 100A, 100B, and 100C have the application service SR1, the control unit CU of the service platform 100A needs to select from the three service platforms 100A, 100B, and 100C.

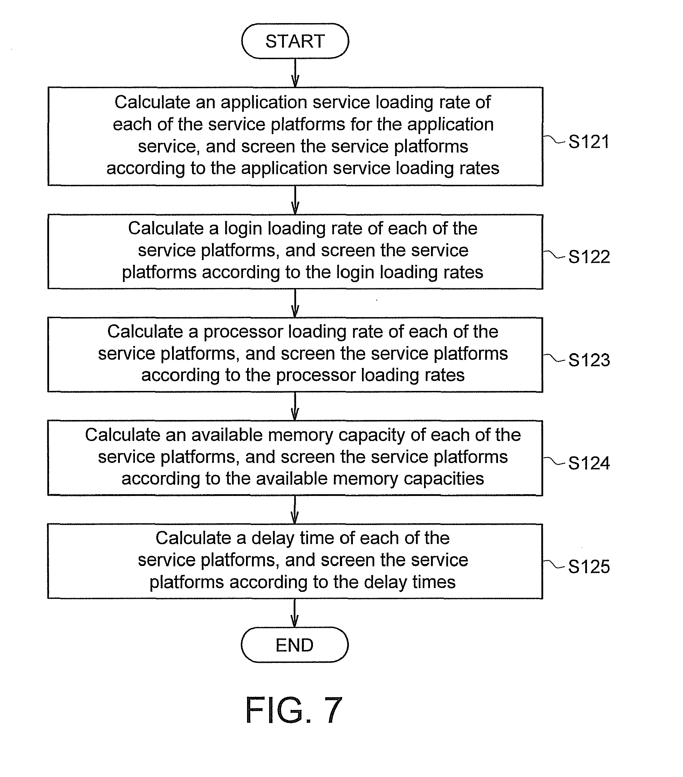

Refer to FIG. 7 and Table 2. FIG. 7 is a detailed flowchart of the step S120 of FIG. 3. Table 2 shows the operation status of the platforms.

**Table 2**

| Service Platform | Processor Loading Rate (%) | Available Memory Capacity (Mbyte) | Delay Time (ms) | Login Populatio n | Login Population Upper Limit |
|---|---|---|---|---|---|
| 100A | 25 | 1520 | 100 | 33 | 50 |
| 100B | 42 | 220 | 500 | 10 | 100 |
| 100C | 50 | 170 | 200 | 5 | 70 |
| and so on | and so on | and so on | and so on | and so on | and so on |

In step S121, the control unit CU of the service platform 100A calculates an application service loading rate of each of the service platforms 100A, 100B, and 100C for the application service SR1, and screens the service platforms 100A, 100B, and 100C according to the application service loading rates. The application service loading rate is a ratio of a user population to a user population upper limit. In the present step, the service platforms having an application service loading rate lower than a first standard value (such as 50%) are screened out. As indicated in Table 1, the service platform 100A has an application service loading rate of 25% (3/12), the service platform 100B has an application service loading rate of 33% (5/15), and the service platform 100C has an application service loading rate of 30% (3/10). The three service platforms 100A, 100B, and 100C each having an application service loading rate lower than the first standard value are all selected.

In step S122, the control unit CU of the service platform 100A calculates a login loading rate of each of the service platforms 100A, 100B, and 100C, and screens the service platforms 100A, 100B, and 100C according to the login loading rates. The login loading rate is a ratio of a login population to a login population upper limit. In the present step, the service platforms having a login loading rate lower than a second standard value (such as 50%) are screened out. As indicated in Table 2, the service platform 100A has a login loading rate of 66% (33/50), the service platform 100B has a login loading rate of 10% (10/100), and the service platform 100C has a login loading rate of 7% (5/70). The service platforms 100B and 100C each having a login loading rate lower than the second standard value are selected.

In step S123, the control unit CU of the service platform 100A calculates a processor loading rate of each of the service platforms 100B and 100C, and screens the service platforms 100B and 100C according to the processor loading rates. In the present step, the service platforms having a processor loading rate lower than a third standard value (such as 60%) are selected. As indicated in Table 2, the service platform 100B has a processor loading rate of 42%, and the service platform 100C has a processor loading rate of 50%. The service platforms 100B and 100C each having a processor loading rate lower than the third standard value are selected.

In step S124, the control unit CU of the service platform 100A calculates an available memory capacity of each of the service platforms 100B and 100C, and screens the service platforms 100B and 100C according to the available memory capacities. In the present step, the service platforms having an available memory capacity higher than a fourth standard value (such as 100 Mbyte) are screened out. As indicated in Table 2, the service platform 100B has an available memory capacity of 220 Mbyte, and the service platform 100C ha an available memory capacity of 170 Mbyte. The service platforms 100B and 100C each having an available memory capacity higher than the fourth standard value are selected.

In step S125, the control unit CU of the service platform 100A calculates a delay time of each of the service platforms 100B and 100C, and screens the service platforms 100B and 100C according to the delay times. In the present step, the service platform having the shortest delay time is selected. As indicated in Table 2, the service platform 100B has a delay time of 500 ms, and the service platform 100C has a delay time of 200 ms. The service platform 100C having the shortest delay time is selected.

The sequence of the steps S121, S122, S123, S124, and S125 can be adjusted according to actual needs.

Then, the method proceeds to step S130, the control unit CU performs the application service SR1 through the selected service platform 100C. In the present step, the control unit CU of the service platform 100A accesses the application service SR1 through the platform interface GI of the service platform 100A, the platform interface GI of the service platform 100C, and the service interface SI of the service platform 100C. The result R3 is transmitted to the user end 900 through the service interface SI of the service platform 100C, the platform interface GI of the service platform 100C, the platform interface GI of the service platform 100A and the user interface UI of the service platform 100A.

Then, the method proceeds to step S140, the control unit CU determines whether the request message Q3 further requests another application service. In the example of FIG. 6, the request message Q3 requests to perform not any other application services but the application service SR1, so the method terminates.

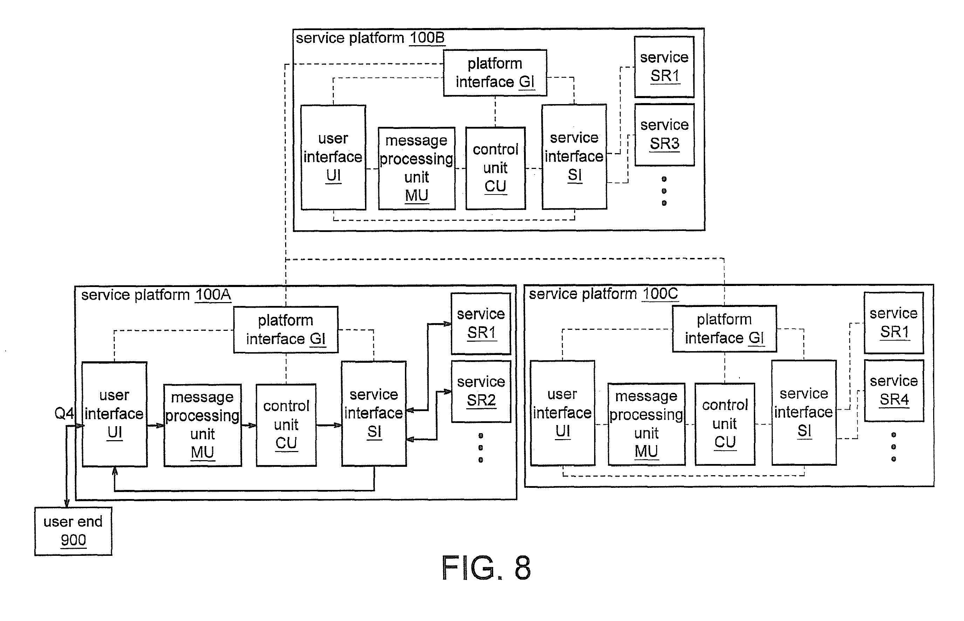

Referring to FIG. 8, a data transmission diagram according to another embodiment is shown. In another embodiment, the request message Q4 further requests the application service SR1 in addition to the application service SR2. Therefore, following step S140 of the flowchart of FIG. 3, the method returns to step S120, one of the service platforms 100A, 100B, and 100C is selected according to the application service SR1. In the present embodiment, the application service SR2 and the application service SR1 are performed by the same service platform 100A.

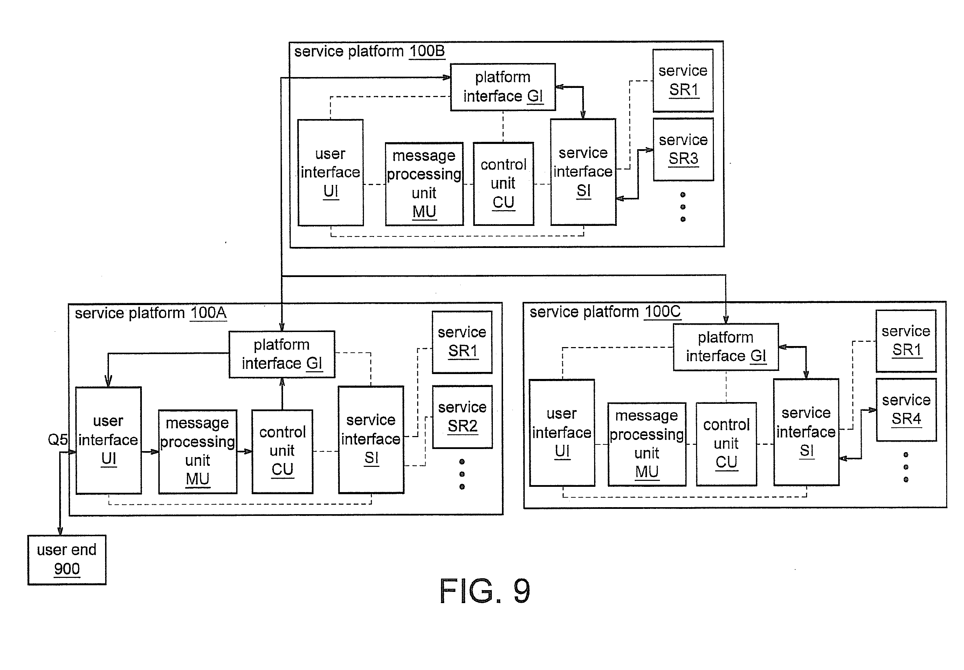

Referring to FIG. 9, a data transmission diagram according to another embodiment is shown. In another embodiment, the request message Q5 further requests the application service SR4 in addition to the application service SR3. As indicated in FIG. 3, after step S140 is performed, the method returns to step S120, one of the service platforms 100A, 100B and 100C is selected to perform the application service SR4. In the present embodiment, the application service SR3 and the application service SR4 are performed by different service platforms 100B and 100C.

As disclosed in the above embodiments, the service platform can share information and communicate with another service platform through a platform interface, such that various application service of the service platform can be effectively integrated, the waiting time of the application service can be reduced and the network speed can be increased.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A controlling method for mobile-edge computing (MEC), **characterized in that** the controlling method comprises:
receiving a request message (Q1, Q2, Q3, Q4, Q5) for requesting a first application service (SR1, SR2, SR3, SR4) by one of a plurality of service platforms (100, 100A, 100B, 100C);
selecting one of the service platforms (100, 100A, 100B, 100C) according the first application service (SR1, SR2, SR3, SR4) of the request message (Q1, Q2, Q3, Q4, Q5); and
performing the first application service (SR1, SR2, SR3, SR4) by the selected service platform (100, 100A, 100B, 100C).

2. The controlling method for mobile-edge computing according to claim 1, wherein the service platform receiving the request message is different from the service platform performing the first application service.

3. The controlling method for mobile-edge computing according to claim 1, wherein the request message further requests a second application service, and the controlling method further comprises:
selecting one of the service platforms according to the second application service; and
performing the second application service by the selected service platform, wherein the first application service and the second application service are performed by the same service platform.

4. The controlling method for mobile-edge computing according to claim 1, wherein the request message further requests a second application service, and the controlling method further comprises:
selecting one of the service platforms according to the second application service of the request message; and
performing the second application service by the selected service platform, wherein the first application service and the second application service are performed by different service platforms.

5. The controlling method for mobile-edge computing according to claim 1, wherein the step of selecting one of the service platforms according to the first application service of the request message comprises:
calculating an application service loading rate of each service platform for the first application service, wherein the application service loading rate is a ratio of a user population to a user population upper limit; and
screening the service platforms according to the application service loading rates.

6. The controlling method for mobile-edge computing according to claim 1, wherein the step of selecting one of the service platforms according to the first application service of the request message comprises:
calculating a login loading rate of each service platform, wherein the login loading rate is a ratio of a login population to a login population upper limit; and
screening the service platforms according to the login loading rates.

7. The controlling method for mobile-edge computing according to claim 1, wherein the step of selecting one of the service platforms according to the first application service of the request message comprises:
calculating a processor loading rate of each service platform; and
screening the service platforms according to the processor loading rates.

8. The controlling method for mobile-edge computing according to claim 1, wherein the step of selecting one of the service platforms according to the first application service of the request message comprises:
calculating an available memory capacity of each service platform; and
screening the service platforms according to the available memory capacities.

9. The controlling method for mobile-edge computing according to claim 1, wherein the step of selecting one of the service platforms according to the first application service of the request message comprises:
calculating a delay time by which each service platform performs the first application service; and
screening the service platforms according to the delay times.

10. A network system (1000) for mobile-edge computing, charactrtised in that the network system (1000) comprises:
a plurality of service platforms (100, 100A, 100B, 100C), wherein one of the service platforms (100, 100A, 100B, 100C) receives a request message (Q1, Q2, Q3, Q4, Q5) for requesting a first application service (SR1, SR2, SR3, SR4);
wherein one of the service platforms (100, 100A, 100B, 100C) is selected according to the first application service (SR1, SR2, SR3, SR4) of the request message (Q1, Q2, Q3, Q4, Q5), and the first application service (SR1, SR2, SR3, SR4) is performed by the selected service platform (100, 100A, 100B, 100C).

11. The network system for mobile-edge computing according to claim 10, wherein the service platform receiving the request message is different from the service platform performing the first application service.

12. The network system for mobile-edge computing according to claim 10, wherein the request message further requests a second application service, one of the service platforms is selected according to the second application service of the request message, the second application service is performed by the selected service platform, and the first application service and the second application service are performed by the same service platform.

13. The network system for mobile-edge computing according to claim 10, wherein the request message further requests a second application service, one of the service platforms is selected according to the second application service of the request message, the second application service is performed by the selected service platform, and the first application service and the second application service are performed by different service platforms.

14. The network system for mobile-edge computing according to claim 10, wherein each service platform has a login loading rate and an application service loading rate for the first application service, the application service loading rate is a ratio of a user population to a user population upper limit, the login loading rate is a ratio of a login population to a login population upper limit, and the service platforms are screened according to the login loading rates or the application service loading rates.

15. The network system for mobile-edge computing according to claim 10, wherein each service platform has a processor loading rate, an available memory capacity and a delay time by which the first application service is performed, and the service platforms are screened according to the processor loading rates, the available memory capacities, or the delay times.
